# EUROPEAN PATENT APPLICATION

(11) **EP 4 843 881 A1**
(43) Date of publication of application: **25.11.2026**
(21) Application number: 26176970.7
(22) Date of filing: 06.05.2026
(51) Int. Cl.: B62M 9/08, B62M 1/36

(54) **IMPROVED BICYCLE CRANKSET**

(30) Priority: 23.05.2025 IT 202500011875
(71) Applicant: Bravi, Fulvio, 60048 Serra San Quirico (AN) (IT)
(72) Inventor: Bravi, Fulvio, 60048 Serra San Quirico (AN) (IT)
(74) Representative: Baldi, Claudio

(57) **Abstract**

Crankset (100) of a drive unit (BQ) of a bicycle (B) comprising a shaft (1) suitable for being rotatably mounted with respect to a frame (BT) of the bicycle (B), a structure (20) fixed to the shaft (1) and comprising a plurality of arms (2) extending radially from the shaft (1), a coupling element (3) for each arm (2) suitable for coupling with a chain (W) of the bicycle (B) to drive the chain (W); wherein said coupling element (3) is slidably mounted relative to the arm (2) in such a way to be retracted and extracted from the arm (2), and at least one body (5) movably mounted relative to the shaft (1) and connected to said coupling elements (3) to extract or retract said coupling elements (3) along the arms (2) when said body (5) moves relative to the shaft (1); wherein said at least one body (5) is suitable for being moved relative to the shaft (1) by actuating the control means (BMC) of the bicycle (B).

## Description

The present patent application for industrial invention relates to an improved bicycle crankset.

As it is known, a bicycle comprises a frame, a steering assembly hinged to the frame and comprising a handlebar, a fork, and a steering tube that connects the handlebar to the fork, a front wheel mounted so as to rotate relative to the fork, a rear wheel mounted so as to rotate relative to the frame, a saddle, and a drive system that transfers the force exerted by the legs of a user on the rear wheel.

A conventional drive system comprises a front crankset mounted so as to rotate relative to the frame, to which cranks with pedals, and a cassette integral with the rear wheel are connected.

The cassette comprises a plurality of sprockets with different diameter, whereas the front crankset may comprise a single sprocket or multiple sprockets with different diameters.

The drive system further comprises a chain that engages a sprocket of the front crankset and a sprocket of the cassette to transmit the rotational motion from the pedals to the rear wheel.

Additionally, the drive system comprises a groupset shaped so as to vary the ratio between the revolutions of the crankset and the revolutions of the rear wheel.

The groupset comprises a rear derailleur shaped so as to move the chain among the sprockets of the cassette and, optionally, also a front derailleur shaped so as to move the chain among the sprockets of the front crankset.

The groupset also comprises control means mounted on the handlebar of the bicycle and connected to the derailleurs to move them according to the command given to said control means. Typically, said control means comprise one or more levers mounted on the handlebar and connected to the derailleurs by means of steel cables in such a way that a movement of the lever determines the actuation of one or both derailleurs, causing a successive movement of the chain.

A chain tensioner is usually connected to the rear crankset and is shaped so as to maintain the chain always at the same tension regardless of the diameter of the sprockets of the cassette and of the front crankset around which the chain wraps.

Although widely marketed and used, similar bicycles comprising conventional drive systems are not free of drawbacks.

In particular, such drawbacks are caused by the presence of multiple sprockets on the cassette and on the front crankset, as well as by the presence of derailleurs suitable for moving the chain among the sprockets.

In fact, the derailleurs must be adjusted in a very precise way as an incorrect adjustment of the derailleurs may cause imprecise gear changes or annoying noises, as well as the fall of the chain during gear changes.

Furthermore, gears are shifted in a stepped way rather than smoothly, and therefore a fine adjustment of the gear ratio preferred by the user is not possible.

Moreover, the systems with multiple sprockets and derailleurs do not allow for shifting the gear when the bicycle is stationary as they require the chain of the bicycle to be in motion.

Precisely to solve the problems that affect the drive systems with multiple sprockets and derailleurs, new continuously transmission systems that are commercially known as "NuVinci" or "Enviolo" systems have been developed, which are stepless gear systems that can be adjusted continuously and do not require the presence of derailleurs.

However, such continuously transmission systems are extremely complicated and expensive to manufacture.

The purpose of the present invention is to overcome the drawbacks of the prior art by designing a crankset for a drive system of a bicycle that allows for continuously shifting the gears without the use of derailleurs and sprockets of different diameters, and at the same time is inexpensive and simple to manufacture.

A further objective of the present invention is to provide an effective, efficient, and versatile crankset.

These objectives are achieved in accordance with the invention with the features listed in the attached independent claim 1.

Advantageous embodiments are disclosed in the dependent claims.

The crankset according to the invention is defined by claim 1.

For greater clarity, the description of the crankset according to the invention continues with reference to the attached drawings, which are for illustrative purposes only and therefore not limiting, wherein:
Fig. 1 is a schematic side view of a bicycle comprising a crankset according to the invention;
Fig. 1A is a schematic top view of a handlebar of the bicycle of Fig. 1;
Fig. 2 is an axonometric view of the crankset according to the invention;
Fig. 3 is a view of an assembly comprising a sleeve of a bicycle frame and the crankset of Fig. 2 mounted so as to rotate relative to the sleeve;
Fig. 4 is the same as Fig. 3, with the addition of an elastic means acting on a drive member of the assembly of Fig. 3;
Fig. 5 is a schematic view of the crankset according to the invention, sectioned along a plane perpendicular to a longitudinal axis of a shaft of the crankset;
Figs. 6 and 7 are schematic front views of the crankset of Fig. 3; in Figs. 6 and 7, the coupling elements of the crankset are positioned in a different configuration;
Fig. 8 shows the crankset of Fig. 6 inserted into a sleeve of the bicycle frame that is sectioned longitudinally.

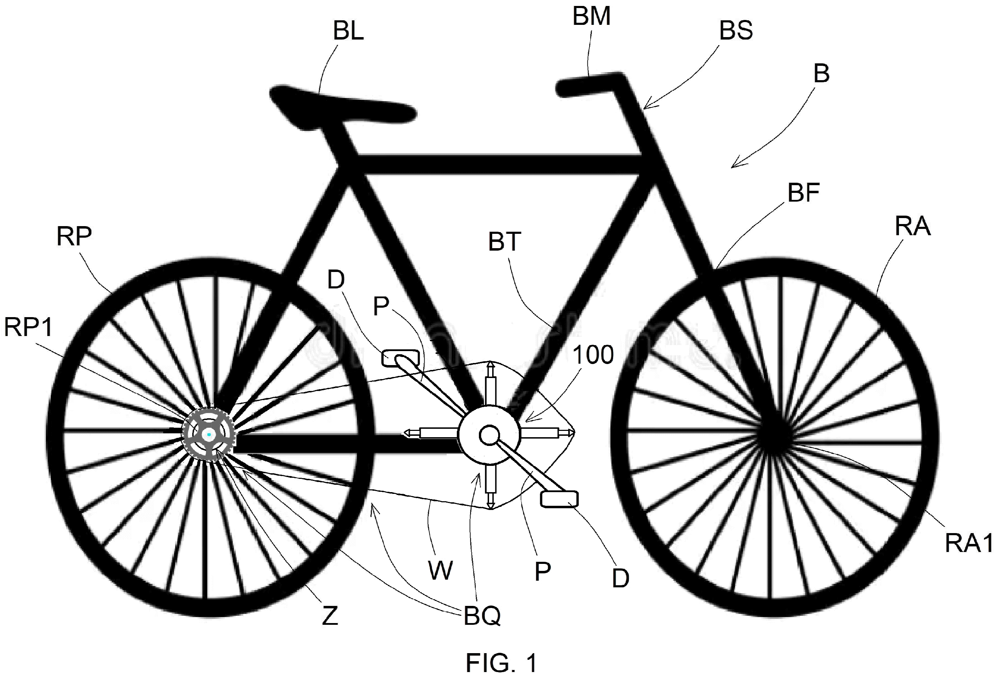

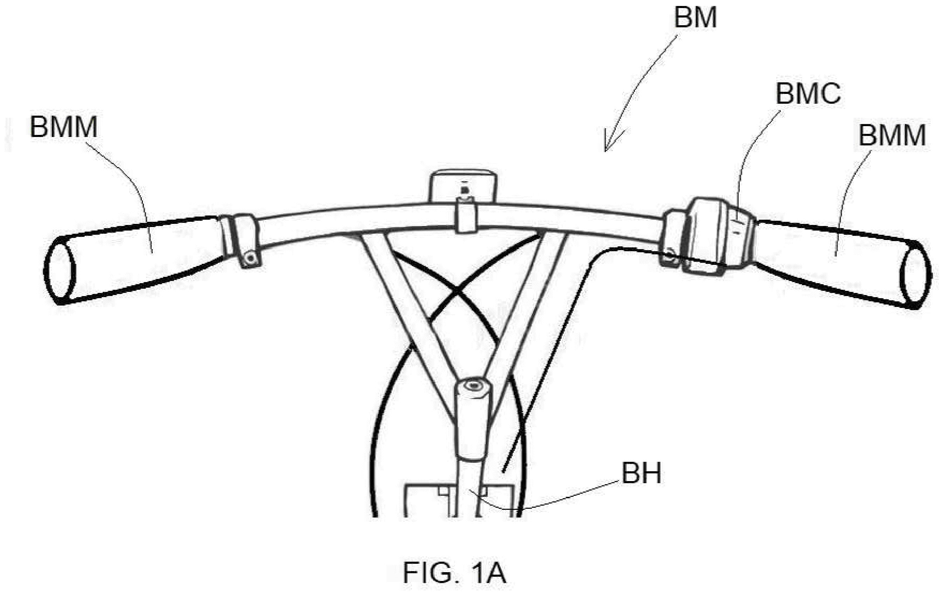

With reference to Fig. 1, a bicycle (B) is shown schematically from a side view.

The bicycle (B) comprises a frame (BT) comprising a front part and a rear part.

A steering assembly (BS) is rotatably connected to the front part of the frame (BT) and comprises a handlebar (BM), a fork (BF), and a steering tube (BH) (shown in Fig. 1A) that connects the handlebar (BM) and the fork (BF) and is rotatably inserted into a bushing in the front part of the frame (B).

The bicycle (B) comprises a front wheel (RA) and a rear wheel (RP).

The front wheel (RA) has a central hub (RA1) that is rotatably connected to the fork (BF) around an axis of rotation, whereas the rear wheel (RP) has a central hub (RP1) that is rotatably connected to the rear part of the frame (BT) of the bicycle (B) around an axis of rotation.

The bicycle (B) also comprises a saddle (BL) connected to the frame (BT) whereon the buttocks of a user are suitable for resting.

The bicycle (B) comprises a drive unit (BQ) comprising a crankset (100) according to the invention rotatably mounted relative to the frame (BT) of the bicycle (B), a rear sprocket (Z) integral with the hub (RP1) of the rear wheel (RP), and a chain (W) that wraps around the crankset (100) and the rear sprocket (Z) and is suitable for transmitting the motion of the crankset (100) to the rear sprocket (Z).

The crankset (100) further comprises two crank arms (P) for supporting respective pedals (D).

With reference to Fig. 1A, the handlebar (BM) of the steering assembly (BS) comprises two grips (BMM) suitable for being gripped by the hands of a user and control means (BMC) suitable for being operated and controlled by the user to manage a gear ratio of the drive unit (BQ).

In particular, the control means (BMC) comprise a ring nut mounted so as to rotate relative to the handlebar (BM) and positioned near one of the two grips (BMM).

Although not shown in Fig. 1A, brake levers suitable for actuating the brakes of the bicycle (B) acting on the wheels (RA, RP) may be mounted on the handlebar (BM).

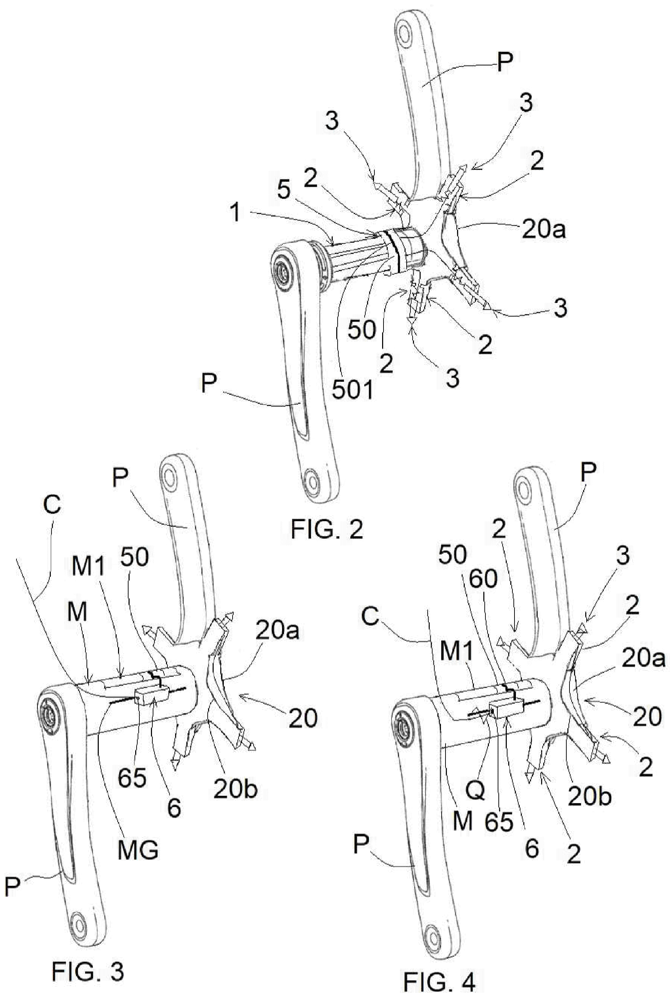

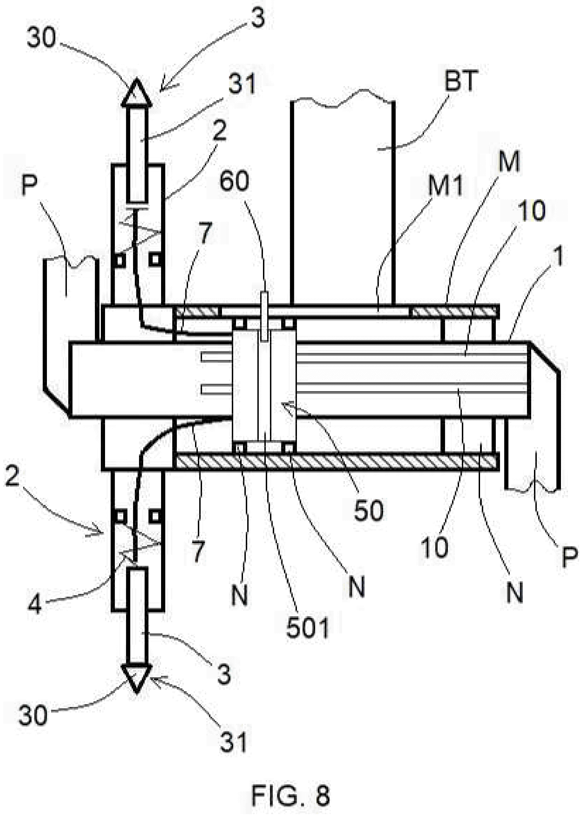

With reference to Figs. 2, 3, 4, 5, 6, 7, and 8, the crankset (100) of the drive unit (BQ) of the bicycle (B) comprises a shaft (1) mounted so as to rotate relative to the frame (BT) of the bicycle (B), at the ends of which the two cranks (P) are attached.

In particular, said shaft (1) is mounted so as to rotate and pass through a sleeve (M) of the frame (BT) of the bicycle (B). The sleeve (M) extends along an axis parallel to the axis of rotation of the rear wheel (RP).

The crankset (100) comprises a radial structure (20) fixed to the shaft (1) and comprises a plurality of arms (2) that protrude radially from the shaft (1).

In particular, said structure (20) is positioned near one of the two cranks (P).

Preferably, the structure (20) has four arms (2) arranged in a cross pattern. In particular, the four arms (2) are angularly equidistant by an angle of 90°.

For each arm (2), the crankset (100) further comprises a coupling element (3) suitable for engaging with the chain (W) of the bicycle (B) to drive the chain (W).

Each coupling element (3) is mounted so as to slide relative to the corresponding arm (2) in such a way to be retracted and extracted from the arm (2).

In particular, each coupling element (3) comprises a stem (31) slidably coupled to said arm (2) and engagement means (30) fixed to an end of the stem (31) and configured so as to engage with the chain (W) of the bicycle.

The stem (31) is preferably slidably inserted into a dedicated guide channel (200) formed inside the arm (2) of the structure (20).

Preferably, the structure (20) consists of two half-bodies (20a, 20b) that can be coupled to define said guide channels (200). By way of example, in Fig. 2, one of the two half-bodies (20b) has been removed from the structure (20) so as to reveal the guide channels (200) wherein the stems (31) of the coupling elements (3) are slidably inserted.

The engagement means (30) fixed to the end of the stem (31) may comprise:
- a toothed wheel comprising a plurality of peripheral teeth suitable for engaging with links of the chain (W);
- a sector of toothed wheel comprising a plurality of teeth suitable for engaging with the links of the chain (W);
- a single tooth suitable for engaging with the links of the chain (W).

The crankset (100) further comprises at least one body (5) mounted so as to be movable relative to the shaft (1) and connected to the coupling elements (3) to move said coupling elements (3) along the arms (2) in extension and retraction with its movement.

Said body (5) is suitable for being moved relative to the shaft (1) when the user actuates the control means (BMC). In the embodiment of the invention in which the control means (BMC) comprise a ring nut mounted on the handlebar (BM), the body (5) can be moved by rotating the ring nut relative to the handlebar (BM).

The control means (BMC) (namely the ring nut) and the body (5) are connected by means of connecting means which, in the preferred embodiment of the invention, comprise an operating cable (C) having two ends interfaced with said ring nut of the control means and with said body (5) in such a way that a rotation of the ring nut of the control means (BMC) causes a movement of the body (5), which in turn causes the retraction or extraction of the coupling elements (3).

With reference to Figs. 2, 5, 6, 7, and 8, the body (5) comprises a ring (50) wherein the shaft (1) is inserted and which is coupled to the shaft (1) in such a way as to slide, but not rotate, relative to the shaft (1).

In particular, the ring (50) is coupled to the shaft (1) by means of a splined coupling. More precisely, grooves (10) are formed on the outer surface of the shaft (1), whereas ribs (50a) are formed on an inner surface of the ring (50) and coupled to said grooves (10).

Alternatively, the outer surface of the shaft (1) and the inner surface of the ring (50) may be configured to provide a prismatic coupling such that the ring (50) can slide, but not rotate relative to the shaft (1).

For each coupling element (3), the crankset (100) further comprises a tie rod (7) that connects the coupling element (3) to the ring (50).

Specifically, each tie rod (7) has one end fixed to the coupling element (3) and the other end fixed to the ring (50).

It should be noted that in the present description the term "tie rod" (7) refers to a flexible wire-like element, such as a cable, a wire, or the like.

Furthermore, for each coupling element (3), the crankset (100) comprises an elastic return means (4) connected to the coupling element (3) and to the arm (2) and configured to push and extract the coupling element (3) from the arm (2). The elastic return means (4) is inserted into the guide channel (200) and can be freely extracted or retracted.

In particular, the elastic return means (4) has a first end fixed to the arm (2) and a second end fixed to the stem (31) of the coupling element (3).

By way of example, said elastic return means (4) is a helical spring which is inserted into the guide channel (200) of the arm (2) and crossed by the tie rod (7).

Therefore, each coupling element (3) is subject to a traction action provided by the tie rod (7) and to an opposite pushing action provided by the elastic return means (4).

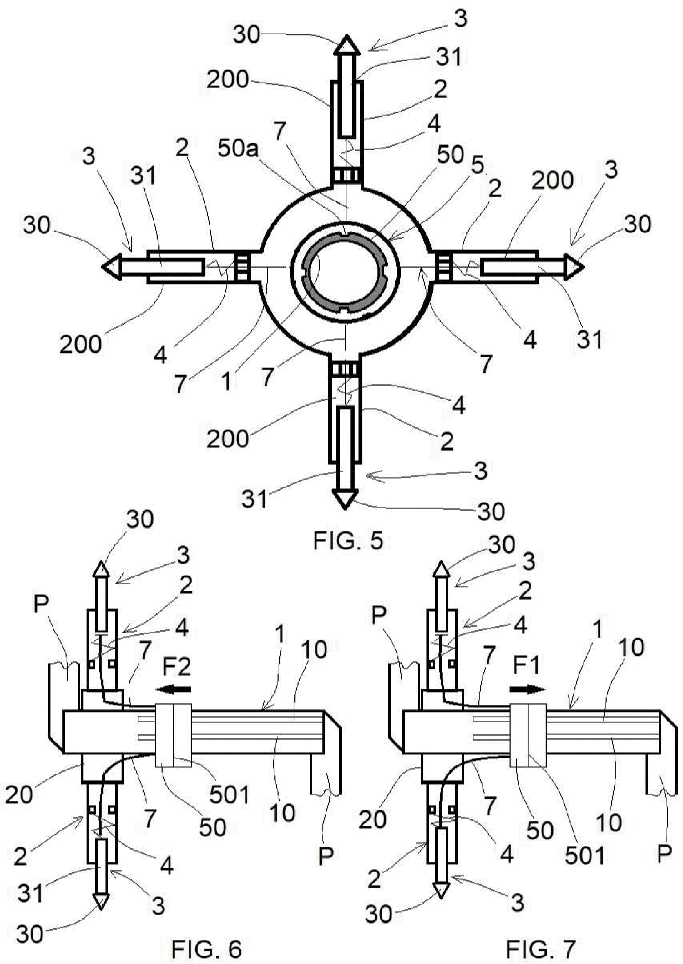

So, with reference to Fig. 7, in order to retract the coupling elements (3), it is necessary to exert a force on the ring (50) sufficient for the ring (50) to slide away from the structure (20) (see the direction of arrow (F1)) so that the tie rods (7) exert a traction on the coupling elements (3), overcoming the opposing force of the elastic return means (4).

Conversely, with reference to Fig. 6, in order to extract the coupling elements (3), it is necessary to make the ring (50) slide towards the structure (20) (see the direction of arrow (F2)) so that the tie rods (7) are loosened and the elastic return means (4) are extended, pushing and extracting the coupling elements (3) until the tie rods (7) are again under tension.

It must be noted that, when using the bicycle (B), the entire crankset (100), i.e., the assembly consisting of the shaft (1), the structure (20), and the ring (50), rotates relative to the sleeve (M).

In order to let the ring (50) slide relative to the shaft (1), the applicant has devised specific features that will be described below.

In particular, thanks to said features, the ring (50) can slide during the rotation of the entire crankset (100) by simply operating the ring nut of the control means (BMC) to which said operating cable (C) is connected.

Said features specifically provide that:
- an annular groove (501) is formed on an outer surface of the ring (50);
- a slot (M1) is formed on the sleeve (M), extending in longitudinal direction along the sleeve (M); and
- a driving means (6) is movably mounted on the frame (BT) of the bicycle (B), said driving means (6) comprising a stop tooth (60) that passes through the slot (M1) and is inserted into the annular groove (501) of the ring (50); the driving means (6) comprises an attachment point (65) to which one end of the operating cable (C) is connected in such a way that said driving means can be moved to drive the ring (50) by actuating the ring nut of the control means (BMC).

In particular, guide means (MG) are formed on the sleeve (M), extending longitudinally along said sleeve (M), whereon said driving means (6) is slidably mounted.

By way of example, said driving means (6) consists of a slider that is slidably mounted on the guide means (MG).

During the rotation of the crankset (100), the stop tooth (60) is constantly coupled with the annular groove (501), and therefore, by sliding the driving means (6) back and forth along the sleeve (M), the stop tooth (60) interferes with the surfaces of the annular groove (501) of the ring (50), moving the ring (50) back and forth.

Thus, by rotating the ring nut of the control means (BMC) in a first direction, the operating cable (C) pulls the driving means (6) away from the structure (20) together with the ring (50).

Conversely, by rotating the ring nut of the control means (BMC) in a second direction, the operating cable (C) is no longer under tension, and the driving means (6) can slide toward the structure (20) together with the ring (50), due to the elastic return action of the elastic return means (4).

Optionally, as shown in Fig. 4, an elastic means (Q) may operate the driving means (6) to assist the elastic return means (4) in pushing the driving means (6) and the ring (50) towards the structure (20) when the operating cable (C) is released.

Otherwise said, the elastic means (Q) is configured to push the driving means (6) in the opposite direction with respect to the direction in which the driving means (6) is pulled by the operating cable (C).

Furthermore, bearings (N) may be arranged between the crankset (100) and the sleeve (M) to reduce friction between the components of the crankset (100) and the sleeve (M).

By way of example, said bearings (N) may be interposed between the shaft (1) and the sleeve (M) and between the ring (50) and the sleeve (M).

It should be noted that, although not shown in the attached figures, a chain tensioner is connected to the rear sprocket (Z) to constantly maintain the chain (W) at the same tension regardless of the position assumed by the coupling elements (3) relative to the arms (2) of the structure (20).

Although the attached figures always show a structure (20) with four arms (2), there is nothing to prevent the creation of a structure (20) with a different number of arms, such as for example three, five, six, seven, etc.

Following is a description of the operating mode of the bicycle (100) comprising the new crankset (100) according to the invention.

When a user pedals, rotating the crankset (100), each coupling element (3) is cyclically coupled with the chain (W) for a rotation of approximately 180°-200°, driving the chain (W) that in turn transmits the motion to the rear sprocket (Z), causing the rotation of the rear wheel (PT).

**If** the user wishes to change the gear ratio between the crankset (100) and the rear sprocket (Z), the user can operate the control means (BMC), causing the movement of the body (5) and thus the extraction or retraction of the coupling elements (3), thereby increasing or decreasing the diameter of a circumference passing through the means of the coupling elements (3).

Obviously, as the coupling elements (3) are extracted or retracted, the chain (W) is maintained constantly and properly tensioned thanks to the provision of the chain tensioner.

Following the preceding description, the advantages of the present invention are now evident.

In fact, thanks to the new crankset (100) according to the invention, it is no longer necessary to use a derailleur to change the gear ratio or gear of the bicycle (B).

Furthermore, the gear shift can also be performed when the bicycle is stationary, and, moreover, it can be performed continuously rather than in steps.

Moreover, it should be emphasized that the new crankset (100) according to the invention is extremely simple and inexpensive to manufacture.

For the purposes of the present patent application, it should be noted that the new crankset (100) can also be advantageously installed on electric bicycles.

Finally, although not shown in the attached figures, instead of a single body (5), the crankset (100) according to the invention may comprise two bodies (5), each one being driven by respective control means (MCB), and each one being connected to a respective pair of coupling elements (3) disposed in two diametrical arms aligned with each other.

In such an embodiment, it is possible to move one or the other body (5) in such a way that a pair of coupling elements (3) is extracted farther than the other pair of coupling elements (3), thus defining a substantially elliptical or even oval shape that allows for maximizing the portion of pedal stroke during which power is delivered by the muscle and minimizing the dead point of the pedal stroke.

Finally, it should be noted that, although the attached figures consistently show and describe the crankset (100) according to the invention as suitable for operating as a front crankset to which the cranks are attached, in an alternative embodiment of the invention, said crankset (100) can be installed on the hub (RP1) of the rear wheel (RP) of the bicycle (B).

In an alternative embodiment of the invention, not shown in the attached figures, the movable body (5) can consist of a bearing comprising the inner ring (50) integrally coupled to the shaft (1) so as to rotate integrally with the shaft (1) and an outer ring locked in rotation. In particular, the outer ring is slidably coupled to the outer sleeve (M) so as to slide, but not rotate relative to the sleeve (M).

The tie rods (7) that connect the body (5) to the coupling elements (3) are attached to the inner ring (50), whereas the end of the operating cable (C) connected to the metal ring of the control means (BMC) of the bicycle (B) is fixed to the outer ring.

Furthermore, with reference to Fig. 9, in an alternative embodiment of the invention, although previously described as being subject to the inward-directed traction action exerted by the tie rods (7) and to the opposite outward-directed pushing action exerted by the elastic return means (4), the coupling elements (3) may not be subject to the action of the elastic return means (4); consequently, the crankset according to the invention may also be devoid of the elastic return means (4).

In particular, in such an embodiment of the invention illustrated in Fig. 9, a return means (R), such as, for example, a pulley, around which the tie rod (7) is passed, is provided at one end of the arm, so that the tie rod (7) exerts an outward-directed traction action on the coupling element (3) that is suitable for counteracting the inward-directed pulling action that is spontaneously generated by the chain of the bicycle during pedaling.

Numerous variations and detailed modifications may be made to the present embodiment of the invention, within the reach of a person skilled in the art, while still falling within the scope of the invention as expressed by the appended claims.

## Claims

1. Crankset (100) of a drive unit (BQ) of a bicycle (B) comprising:
- a shaft (1) suitable for being rotatably mounted relative to a frame (BT) of the bicycle (B);
- a structure (20) fixed to the shaft (1) and comprising a plurality of arms (2) projecting radially with respect to the shaft (1);
- a coupling element (3) for each arm (2) suitable for coupling with a chain (W) of the bicycle (B) in order to drive the chain (W); wherein said coupling element (3) is slidably mounted with respect to the arm (2) in such a way to be retracted and extracted from the arm (2);
- at least one body (5) movably mounted relative to the shaft (1) and connected to said coupling elements (3) to extract or retract said coupling elements (3) along the arms (2) when said body (5) moves relative to the shaft (1); wherein said at least one body (5) is suitable for being moved relative to the shaft (1) by means of control means (BMC) of the bicycle (B);
wherein said body (5) comprises a ring (50) wherein the shaft (1) is inserted and which is coupled to the shaft (1) in such a way as to slide, but not rotate relative to the shaft (1);
wherein for each coupling element (3), said crankset (100) comprises a tie rod (7) that connects the coupling element (3) to the ring (50).

2. The crankset (100) according to claim 1, wherein for each coupling element, the crankset comprises an elastic return means (4) connected to the coupling element (3) and to the arm (2) and configured to push the coupling element (3).

3. The crankset (100) according to any of the preceding claims, wherein said crankset (100) comprises four arms (2) arranged in a cross pattern with respect to each other.

4. The crankset (100) according to any of the preceding claims, wherein each coupling element (3) comprises a stem (31) slidably coupled to said arm (2), and engagement means (30) fixed to an end of the stem (31) and suitable for engaging with the chain (W) of the bicycle (B).

5. The crankset (100) according to any of the preceding claims, wherein said ring (50) comprises an annular groove (501) formed on an outer surface of the ring (50).

6. The crankset (100) according to any of the preceding claims, wherein said body (5) consists of a bearing comprising the inner ring (50) coupled to the shaft (1) and an outer ring locked in rotation.

7. Assembly comprising a crankset (100) according to any of the preceding claims and a sleeve (M) of a frame (BT) of a bicycle (B); wherein said shaft (1) of the crankset (100) is rotatably inserted inside the sleeve (M).

8. The assembly according to claim 7, when the crankset (100) is dependent on claim 6, wherein said outer ring is locked in rotation to the sleeve (M) so as to slide, but not rotate with respect to the sleeve (M).

9. The assembly according to claim 8, wherein said outer ring comprises an attachment point suitable for being fixed to one end of an operating cable (C) connected to a metal ring of a control means (BMC) of the bicycle (B).

10. The assembly according to claim 7, when the crankset (100) depends on claim 5, wherein a slot (M1) is formed in the sleeve (M), extending longitudinally along the sleeve (M); wherein said assembly comprises a driving means (6) suitable for being movably mounted relative to the frame (BT) of the bicycle (B); wherein said driving means (6) comprises a stop tooth (60) passing through the slot (M1) of the sleeve (M) and inserted into the annular groove (501) of said ring (50); wherein said driving means (6) is suitable for being moved by actuating the control means (BMC) of the bicycle (B).

11. The assembly according to claim 10, wherein guide means (MG) are formed on the sleeve (M), extending longitudinally along said sleeve (M); wherein said driving means (6) is slidably mounted on said guide means (MG).

12. The assembly according to claim 10 or 11, wherein said driving means (6) comprises an attachment point suitable for being fixed to one end of an operating cable (C); wherein said operating cable (C) has another end fixed to a metal ring of the control means (BMC) of the bicycle (B).

13. The assembly according to claim 12, comprising an elastic means (Q) operating the driving means (6) and configured to push the driving means (6) in opposite direction with respect to the direction in which the driving means (6) is pulled by the operating cable (C).
